# EUROPEAN PATENT SPECIFICATION

(11) **EP 4 435 363 B1**
(45) Date of publication and mention of the grant of the patent: **06.08.2025**
(21) Application number: 23163837.0
(22) Date of filing: 23.03.2023
(51) Int. Cl.: F25D 29/00, G06Q 30/018, G06Q 30/06, G06Q 40/04, F25D 23/10

(54) **CONTROL SYSTEM AND METHOD OF CONTROLLING A REFRIGERATOR**
STEUERSYSTEM UND VERFAHREN ZUR STEUERUNG EINES KÜHLSCHRANKS
SYSTÈME DE CONTRÔLE ET MÉTHODE DE CONTRÔLE D'UN RÉFRIGÉRATEUR

(43) Date of publication of application: 25.09.2024
(73) Proprietor: Indel B S.p.A., 47866 Sant'Agata Feltria (RN) (IT)
(72) Inventor: BORA, Luca, 62012 CIVITANOVA MARCHE MC (IT)
(74) Representative: Modiano, Micaela Nadia

(56) References cited:
- EP-A1- 0 881 443
- CN-A- 114 877 614
- US-A1- 2009 277 200
- US-B1- 10 012 418

## Description

The present invention relates to a method for controlling refrigerated items of furniture, such as fridges, minibars and the like, and a related control system.

As is known, the rooms in hotels and in other temporary accommodation solutions are provided with fridges or minibars, which are capable of containing, in a refrigerated compartment, beverages, confectionery and/or other snacks, so as to make them available to the guests in the room.

Such items of furniture are effectively small refrigerators, and are provided with a compressor which, according to conventional and well-known methods, ensures the desired temperature inside the compartment.

The operation of the compressor is controlled by a thermostat which switches it on when the temperature inside the compartment rises above a preset threshold value and keeps it active until the desired temperature is reached.

It is likewise well-known that the noise generated by the compressor during its operation constitutes an unwanted annoyance for the guests in the room.

In this regard therefore, some more traditional solutions simply associate the compressor with a timer, with which it is possible to set the compressor to be switched off at times that traditionally are spent sleeping (at night and in the early afternoon). However, by now these solutions have been found to be inadequate, as it is impossible to know or predict with the required precision the habits of the guests, who might legitimately wish to rest at times when the timer is set to switch on the compressor.

Over time, more advanced solutions have therefore been sought, in particular by using a device known as an "energy saver", which nowadays is widespread in hotel rooms and in other places.

This device takes the form of a slot mounted on a wall, into which one of the guests can slide a key card which constitutes the key to access the room: only when the key card is inserted and kept in the slot will the electrical utilities of the room (television, lighting, air conditioning, etc.) be enabled, and these utilities will then be disabled when the key card is removed (by the guest, when he or she exits from the room), in order to prevent needless consumption of energy.

In this context therefore, implementation solutions are known which involve sending a signal to the compressor, when the key card is inserted in the slot, which causes the switch-off and/or the disabling of the operation of the compressor, so as to prevent the latter from making noise during the guest's stay (the presence of the guest is confirmed by the presence of the key card in the slot). As long as the key card is in the slot, the compressor can be reactivated only for an emergency mode, which is activated automatically when preset safety temperature is exceeded (this preset safety temperature is far above the temperature at which it is normally desired to maintain the compartment), in order to prevent the foodstuffs from perishing in the event of an extended stay of the guests.

Then when the guest exits from the room, bringing with them the key card, the normal operation of the compressor is re-enabled.

Such implementation solution is also however not devoid of drawbacks.

Increasingly often, in fact, each customer is given at least two key cards, and it is now normal practice to leave one of these constantly in the slot, even when the room is empty, for example to ensure the continuity of operation of the air conditioning or of other associated electrical utilities.

In such circumstances, evidently the method just described of controlling the compressor is completely skewed, allowing the latter to activate only for the emergency mode, independently of the presence or otherwise of guests.

Another drawback of the method just described arises when, in a room that has lain vacant for some time, a chambermaid, an attendant or other member of staff enters for a brief time.

It should be noted in fact that usually a high energy saving mode is activated automatically when for a long time no key card is inserted in the slot (meaning, when for a long time no guest occupies the room): in this mode, the compressor maintains the compartment at a temperature higher than the temperature required under normal conditions (but lower than the temperature of the emergency mode). The entry of staff members into the room (and therefore the insertion of the key card into the slot) deactivates this functionality, restoring the functionality intended for guests, with unwanted wastage of energy.

Relevant prior art can be found in US 2009/277200 A1.

The aim of the present invention is to solve the above mentioned problems, by providing a method for controlling refrigerated items of furniture, such as fridges, minibars and the like, that makes it possible to optimally manage the operation of the compressor or in any case of the device responsible for subtracting heat inside the compartment of the item of furniture.

Within this aim, an object of the invention is to provide a control system that makes it possible to optimally manage the operation of the compressor or in any case of the device responsible for subtracting heat inside the compartment of the item of furniture.

Another object of the invention is to provide a method and a control system for refrigerated items of furniture that make it possible to interact optimally with an energy saver.

Another object of the invention is to provide a method and a system that make it possible to optimally manage the switching on and off of the compressor, even if a chambermaid or other member of staff enters the room for a brief time.

Another object of the invention is to provide a method and a system that ensure a high reliability of operation.

Another object of the invention is to provide a method and a system that adopt an alternative technical and structural architecture to those of the conventional solutions.

Another object of the invention is to provide a method and a system that can be easily implemented using elements and materials that are readily available on the market.

Another object of the invention is to provide a method and a system that are of low cost and safely applied.

This aim and these and other objects which will become better apparent hereinafter are achieved by a method according to claim 1 and by a system according to claim 12.

Further characteristics and advantages of the invention will become better apparent from the detailed description that follows of a preferred, but not exclusive, embodiment of the method and of the system according to the invention, which is illustrated by way of non-limiting example in the accompanying drawings wherein:
Figure 1 is a block diagram of the method according to the invention;

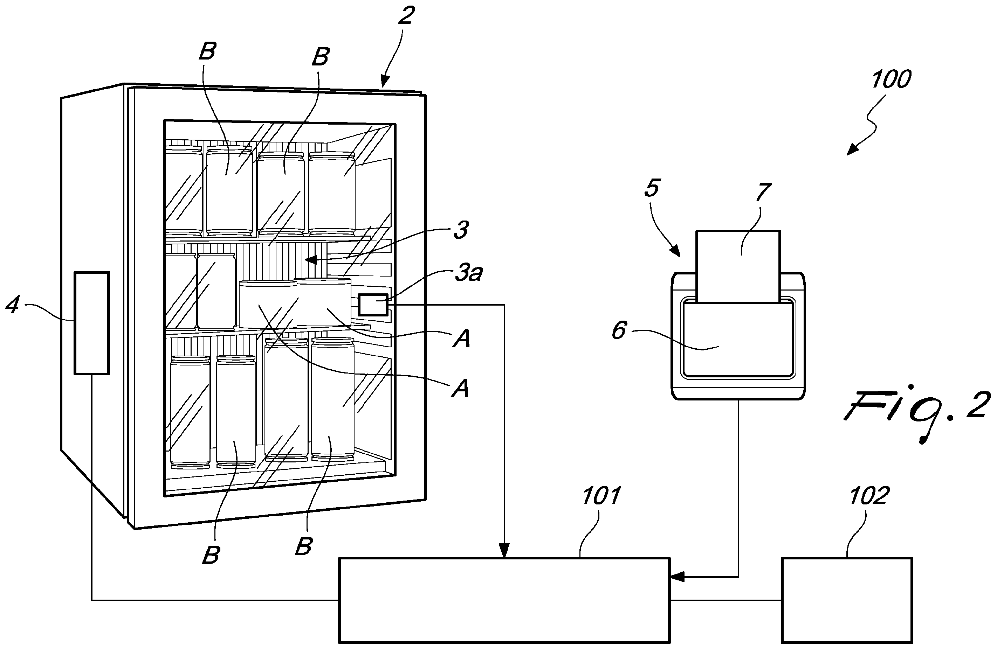

Figure 2 is a schematic view of the system according to the invention.

With particular reference to the figures, the reference numeral 1 generally designates a method for controlling refrigerated items of furniture 2, which are placed in a room.

The items of furniture 2 on which the method according to the invention is intended to be applied are of the type comprising a compartment 3, configured to accommodate food A and beverages B, and a refrigeration unit 4, adapted to subtract heat from the compartment 3.

The items of furniture 2 are therefore of the type (per se well-known) of fridges or minibars, and typically (but not necessarily) the room in which they are placed is the room of a hotel or of another temporary accommodation solution, in which said items of furniture make the foods A and beverages B available to a person (a guest or customer), ensuring the foods A and beverages B are refrigerated by virtue of the unit 4.

In this regard, it should be noted that in the preferred embodiment the unit 4 executes a conventional refrigeration cycle and therefore comprises a compressor that, if connected to an electric power supply, can be activated to compress an intermediate fluid that subtracts heat. The first objective of the method 1 according to the invention is to prevent, as far as possible, the noise generated by the operation of the compressor (or in any case of the unit 4) from causing annoyance to the guests in the room.

In any case, the protection that is claimed herein covers the possibility that the unit 4 achieves the subtraction of heat in another manner and/or by availing of other components (thermoelectric modules for example): in any case, the invention makes it possible to limit or cancel the operation of the unit 4 during the stay of the guests (as will be explained below) and therefore in any case the annoyance is contained or eliminated for these guests.

According to the invention, first of all the method 1 entails at least, in a step a., making the refrigeration unit 4 operate in an accumulation operating mode, in which the refrigeration unit 4 automatically maintains the temperature of the compartment 3 substantially at a first preset value, adapted to an optimal refrigeration and conservation of its contents. In more detail, in the accumulation mode, and by virtue of for example a temperature sensor 3a arranged in the compartment 3, it is possible to proceed so that the unit 4 is activated in order to subtract heat whenever the temperature rises above the first value (taking account of an accepted tolerance or hysteresis), and is then deactivated (awaiting reactivation) as soon as the temperature returns to below the first value. In this manner in fact, the temperature is kept substantially at the first value, where the term "substantially" (here and in the discussion below) means a neighborhood "centered" on a reference value, taking account of hysteresis and tolerances. In particular, the first preset value of temperature can be chosen in the range 2-5° C and preferably can be chosen equal to 3°C. In this regard it should be noted that the first value can be the one adopted in normal refrigerators when the compressor is left free to operate, or (and the specific temperatures given above refer to this option) a first, lower value can be chosen, in order to ensure an effective "accumulation of cold" (whence the name chosen for the mode), useful for the subsequent step (as will become clear below).

It should be noted that the step a. (effectively, the start of the method 1) is started and continued when there are no people in the room.

Furthermore, the method 1 entails at least, in a step b., activating an inactive operating mode, in which the refrigeration unit 4 is switched off (deactivated), upon the detection of the entry into the room of a person. In this manner, it is in fact possible to prevent the unit 4, with its operation, from causing annoyance to the guests in the bedroom or room in which the item of furniture 2 is arranged, so leaving them (indeed) to rest in greater peace. It should be noted that switch-off or activation "of the unit 4" are to be understood as entirely equivalent to switch-off or activation "of the compressor" (if a compressor is used).

The switch-off evidently causes the temperature of the compartment 3 to progressively rise, but it should be noted that, even with the unit 4 switched off, it can still be kept sufficiently low for even an extended period, first of all by virtue of the fact that a first preset value can be chosen that is very close to zero (like the value in the examples illustrated previously). Furthermore, the possibility exists of arranging one or more heat accumulators (conventional or otherwise) in the compartment 3, which are also cooled by the unit 4 (in particular in the step of accumulation) and which, when the latter is switched off, can in turn subtract heat from the compartment 3, in order to keep the temperature low for longer.

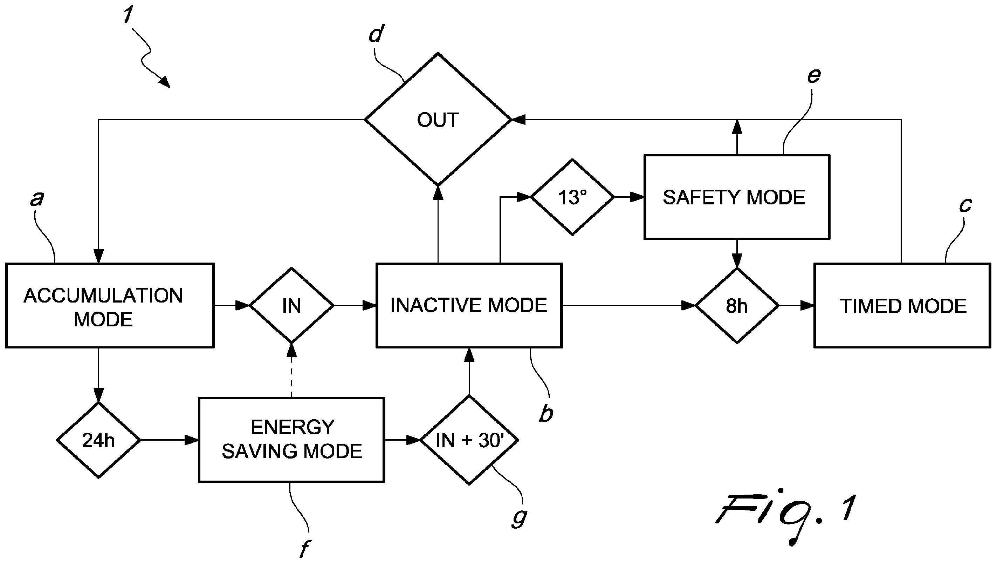

Furthermore, after the unit 4 has been made to operate in the inactive mode (it is kept switched off in step b.) for a first preset time period, the method 1 entails at least, in a step c., automatically activating a timed operating mode, in which the unit 4 is kept active in at least one preset time slot. In particular, the duration of the first period is preferably comprised between 6 hours and 12 hours and, in an embodiment of the invention of significant practical interest, which in any case does not limit the invention, is even more preferably equal to 8 hours. A first period equal to 8 hours is what is shown in the preferred embodiment of the method 1 illustrated in Figure 1, for the purposes of non-limiting example of the invention.

Keeping the unit 4 "active" means that it can operate again in order to subtract heat from the compartment 3, substantially as in the accumulation mode, but only in one or more time slots, and with reference to a second preset value which may or may not coincide with the first.

In particular, the timed mode keeps the unit 4 active in one or more different time slots, in which the unit 4 automatically keeps the temperature of the compartment 3 substantially at respective second preset values, which may be different from each other and/or optionally the same as the first preset value. For example there could be a second value equal to the first value (3° C for example) and another, higher value (5° C for example).

The choice to pass to the timed mode after eight hours, or in any case the first preset time period, have elapsed after shutdown, is found to be of the greatest interest: as has been seen, the shutdown of the unit 4 in step b. is determined by the entry of people into the room and by the desire not to cause them annoyance, but after several hours it can be assumed that their exit from the room has not been detected (we will return to this point later) and therefore the method will automatically restart the unit 4, but in the timed mode, in order to enable in any case the cooling of the compartment 3, but keeping it active only in one or more time slots, which will be chosen preferably from among the time slots that cause the least annoyance (to take into account the possibility that there actually is a person still present in the room).

So for example, a first time slot for activation of the unit 4 could be the slot between 17:00 and 21:00, and a second time slot between 9:00 and 13:00.

Furthermore, during the operation of the refrigeration unit 4 in the inactive mode or in the timed mode, upon detection of the exit of the person from the room the method 1 entails at least, in a step d., restoring the accumulation mode (i.e., returning to perform step a.). In fact, in the absence of people, the unit 4 can be made to operate without any restriction, without fear of causing annoyance to anyone.

In the block diagram of the method 1 illustrated in Figure 1, for the purpose of non-limiting example of the invention, the entry is identified with the "IN" block and the exit with the "OUT" block.

It should be noted that the detection of the entry into or of the exit from the room of people can be done in any way, while remaining within the scope of protection claimed herein. In particular, preferably the entry of people is associated with the enabling of other electrical utilities of the room (other than the unit 4) and the exit is associated with their disabling (in order to prevent, for example, a lamp or the television from remaining needlessly switched on in the absence of guests in the room).

In any case, the implementation of the invention can make use of an "active" detection (which requires an action on the part of the person), and which for example can entail a switch arranged near the entry door, which the person has to press in order to indicate/register entry or exit; or, it can make use of a "passive" detection (which does not require an action from the person), which for example can be obtained by conveniently placing one or more proximity sensors or sensors of another type in the room, which are configured to detect the transit of the person.

In the preferred embodiment of the invention, which in any case does not limit the invention, the method 1 is actuated to control (at least) one item of furniture 2 placed in a room in which an energy saver device 5 is installed which effectively carries out the detection ("active") of the entry and of the exit. Such device 5 (which can be per se known) comprises a slot 6 adapted for the insertion of a key card 7, and is configured to inhibit electrical utilities of the room (other than the unit 4) when the key card 7 is not inserted in the slot 6. Typically, and according to well-known practice, the key card 7 is the "smart card" or key to the room which is provided (in one or more copies) to the guest of said room and which (electronically) ensures access thereto. The holder of the key card 7 must therefore insert it into slot 6 upon entry into the room (in order to enable the associated utilities) and must extract it upon exit (in order to prevent needless wastage of energy).

In this context therefore, in the method 1 according to the invention the detection of the entry into the room of a guest (which determines the execution of step b. and therefore the transition to the inactive operating mode) consists in the introduction of the key card 7 into the slot 6, while the detection of the exit from the room of the person (which determines the execution of step d. and therefore the restoration of step a. and of the accumulation operating mode) consists in the extraction of the key card 7 from the slot 6.

The activation of the timed mode (step c.) makes it possible in this context to restart the unit 4 even if, as increasingly often is done, the key card 7 is left in the slot 6 even upon the exit from the room (for example in order to keep the air conditioning running regardless).

Usefully, the method 1 can entail, in a step e., activatable automatically at least during the execution of said step b. in which the unit 4 is kept switched off in the inactive mode, when the current temperature value in the compartment 3 reaches a third preset value, higher than the first value, automatically activating a safety operating mode, in which the unit 4 is made to operate at least to substantially maintain such third value inside the compartment 3.

If the guest remains for several hours in the room, then before activation of the timed mode, the temperature of the compartment 3 might rise excessively in any case: the step e. makes it possible to avoid excessive heating, which could cause the perishing of the products inside it.

For example, the third preset value of temperature can be chosen in the range 11-15° C, and preferably, in an application of significant practical interest, is equal to 13°C.

A third value equal to 13° C is what is shown in the preferred embodiment of the method 1 illustrated in Figure 1, for the purposes of non-limiting example of the invention.

From the safety mode the method can pass to the accumulation mode (step a.), if the exit of the person from the room is detected, or to the timed mode (step c.), once the first preset period (since the previous activation of the inactive mode) has elapsed.

Advantageously, the method 1 can entail, after the refrigeration unit 4 is made to operate in the accumulation mode (step a.) for a second preset time period, automatically activating, in a step f., an energy saving operating mode.

In the energy saving mode, the unit 4 automatically keeps the temperature of the compartment 3 substantially at a fourth preset value, higher than the first value. The energy saving mode entails an operation of the unit 4 that is similar to that of the accumulation mode, but preserving a higher temperature in the compartment 3, chosen so as to ensure in any case an adequate conservation of food A and beverages B but such as to result in a lower consumption of energy. This is an option of great interest, in that it makes it possible to automatically reduce energy consumption if the room lies vacant for some time (unsold for example), and the duration of the second period can be chosen in precisely such a context. For example, the duration of the second period can preferably be comprised between 18 hours and 48 hours and even more preferably can be equal to 24 hours. A second period equal to 24 hours is what is shown in the preferred embodiment of the method 1 illustrated in Figure 1, for the purposes of non-limiting example of the invention.

For example, the fourth preset value of temperature can be chosen in the range 5-9° C, and preferably, in an application of significant practical interest, is equal to 7°C. A fourth value equal to 7° C is what is shown in the preferred embodiment of the method 1 illustrated in Figure 1, for the purposes of non-limiting example of the invention.

In a first possible embodiment, the method can exit from the energy saving mode as soon as the entry is detected of a person into the room (as per the accumulation mode), thus resulting in (step b.) the immediate activation of the inactive mode (this step is shown with a dotted line in the block diagram of Figure 1).

In the preferred embodiment, illustrated in the accompanying figures for the purposes of non-limiting example of the invention, the method 1 entails restoring the inactive mode in a step g., which is activated automatically during the execution of step f. after the detection of the entry into the room of a person and after an additional third preset time period has subsequently elapsed without the exit from the room of the person being detected.

The restoring of the inactive mode is mainly aimed at not causing annoyance to a new customer who returns to occupy the room after the room has lain vacant for a long time (or to the old customer who re-enters after a prolonged absence): the choice to wait for an additional third preset time period to elapse makes it possible to avoid leaving the energy saving mode, when a chambermaid or an attendant enters the room (for a short time). The duration of the third time period is therefore chosen in this context. Preferably, the duration of the third period is comprised between 15 minutes and 1 hour and is even more preferably equal to 30 minutes.

A third period equal to 30 minutes is what is shown in the preferred embodiment of the method 1 illustrated in Figure 1, for the purpose of non-limiting example of the invention. But if the exit is detected before the third period has completely elapsed, the method 1 stays in the energy saving mode (step f.).

Advantageously, one or more of the mentioned preset values of temperature and/or one or more of the above mentioned predefined periods are reprogrammable at will. Such possibility of reprogramming can be left (in whole or in part) to the operator of the room (the hotelier) and/or to each guest, so as to enable the latter to "customize" the behavior of the unit 4 according to his or her needs. For example, anyone can be allowed to customize all the preset temperature values and of all the preset periods; or, preferably, hoteliers and guests can be allowed to customize only the time slots or in any case the times associated with the timed mode only, while all the rest will be modifiable only with the intervention of a specialist technician (by reprogramming the operating logic of the item of furniture 2).

In addition to the method 1 according to the invention, the present discussion also relates to a control system 100, which effectively entails the components necessary for the execution of the method 1.

The system 100 comprises at least one refrigerated item of furniture 2, which can be arranged in a room (the room of a hotel for example) and which comprises a compartment 3, configured to accommodate food A and beverages B, and a refrigeration unit 4, adapted to subtract heat from the compartment 3. All the considerations made in the foregoing pages are true for the item of furniture 2 and the unit 4.

Furthermore, the system 100 comprises at least one electronic unit 101 for control and management, which is configured to switch the refrigeration unit 4 on and off (its compressor for example, as noted in the foregoing pages).

The electronic unit 101 can be of any type, and for example it can be a controller, a PLC or an electronic computer; it is in any case provided with the components and software and/or hardware connections necessary for commanding the unit 4 and, more generally (as will become clear below) for executing the method 1.

The unit 101 can also be installed (entirely or partially) on board the item of furniture 2.

Furthermore, the system 100 comprises at least means (active or passive) of detecting the entry and the exit of a person into and from the room, which are functionally associated with the unit 101, so that the information about the entry or the exit can be automatically sent to the latter. The means perform the detection function already discussed (according to various practical techniques) in the foregoing pages. In particular, in the preferred embodiment the means comprise or are constituted by a device 5 (an energy saver).

According to the invention, the unit 101 comprises at least:
- first instructions for making the unit 4 operate in an accumulation operating mode, in which the unit 4 automatically maintains the temperature of the compartment 3 substantially at a first preset value (3° for example),
- second instructions for automatically activating an inactive operating mode of the unit 4, in which the latter is switched off, upon the detection of the entry of a person into the room,
- third instructions for automatically activating a timed operating mode of the unit 4, in which the unit 4 is kept active in at least one preset time slot, after which the unit 4 is made to operate in the inactive mode for a first preset time period (eight hours for example),
- fourth instructions for restoring the accumulation mode upon detection, during the operation of the unit 4 in the inactive mode or in the timed mode, of the exit of the person from the room.

In other words, the first, second, third and fourth instructions make it possible to execute respectively steps a., b., c. and d. of the method 1, and therefore, more generally make it possible for the unit 101 and the system 100 to execute said method 1.

All the considerations and the practical examples illustrated in the foregoing pages in relation to the method 1 are to be understood as also referring (*mutatis mutandis*) to the system 100.

It is therefore the unit 101 that switches the unit 4 on or off as a function of the various different events, of the elapsing of time and of the current temperature of the compartment 3, detected by the temperature sensor 3a (controlled by said unit 101).

The unit 101 can be provided with (or associated with) an interface 102, which allows the programming or reprogramming of the preset values of temperature and/or of the preset time periods.

In the present description, the term "instructions" means the set of software instructions or routines that the person skilled in the art would be in a position to choose in order to execute the functions made necessary in each instance. Furthermore, the system 100 should be understood to include all the hardware components, which can be per se known, that are necessary to accomplish these functions.

In particular, the unit 101 can also comprise fifth instructions for automatically activating a safety operating mode of the unit 4 (and therefore for executing step e. of the method 1), when, at least during the operation of the unit 4 in the inactive mode, the current value of temperature in the compartment 3 reaches a third preset value (13° C for example), higher than the first value. In such safety mode the refrigeration unit 4 maintains the third value inside the compartment 3.

More specifically, the unit 101 can also comprise sixth instructions for automatically activating an energy saving operating mode of the unit 4 (and therefore for executing step f. of the method 1), in which the unit 4 automatically maintains the temperature of the compartment 3 substantially at a fourth preset value (7° C for example), higher than the first value, after the unit 4 is made to operate in the accumulation mode for a second preset time period (24 hours for example).

Usefully, the unit 101 can also comprise seventh instructions for restoring the inactive mode automatically when, during the operation in the energy saving mode, the entry into the room of a person is detected and, preferably, after a third preset time period has subsequently elapsed without the exit from the room of the person being detected. The seventh instructions therefore make it possible to execute step g. of the method 1 according to the invention.

The execution of the method 1 and the operation of the system 100 according to the invention have been thoroughly explained in the foregoing pages, but a brief summary is also given below.

In the absence of people (guests) in the room in which the item of furniture 2 is installed, the unit 4 can be started in the accumulation mode, in order to bring the compartment 3 to the first preset value of temperature (3° C for example) and keep it there.

When a person (a customer or guest) enters the room and inserts the key card 7 in the slot 6 of the energy saver, a signal is sent (typically via a dedicated mains electricity supply) to the unit 101 and activates step b., which results in the compressor and the unit 4 being switched off. As has been seen, other ways of detecting the entry of the guest can be envisaged, which in any case remain within the scope of protection claimed herein. Under these conditions, food A and beverages B can still stay fresh by virtue of the subtraction of heat ensured for example by heat accumulators (accumulator plates) placed in the compartment 3. At the same time, switching off the unit 4 makes it possible to avoid any annoyance or inconvenience to the guests which would otherwise be caused by the noise.

If, as a result of a prolonged shutdown, the effect of the accumulators runs out, or the temperature in any case reaches the third preset value (13° C for example), the safety mode (step e.) is automatically activated and forestalls the risk of deterioration of the products by preventing a further rise in the temperature of the compartment 3 (a minimal activation of the unit 4 is sufficient and therefore the inconvenience is in any case contained).

Then, when the person (guest or customer) exits from the room and removes the key card 7 from the slot 6 of the energy saver (or the exit is detected in some other way), another signal is sent to the unit 101 which restores the unit 4 to operation (step d.) in order to subtract heat again at the maximum possible speed and power (the noise will not cause annoyance to anyone, since the room is empty). So step a. of the method 1 and the accumulation mode is restored.

In an entirely peculiar and innovative manner, the entry of a person into the room activates not only the inactive mode (step b.), but also a timer which ensures that, once a first time period (eight hours for example) has elapsed without the person having exited, the method 1 automatically executes a step c., which brings the unit 4 from the inactive mode to the timed mode. Thus, if the customer was to exit from the room without removing the key card 7 or in any case without the exit being detected, the temperature of the compartment 3 is not left to rise to the third preset value, and the unit 4 is instead activated in one or more preset time slots, typically chosen to correspond to waking hours.

Also during the execution of step c. (i.e., even when the unit 4 is operating in the timed mode), the extraction of the key card 7 from the slot 6 or in any case the effective detection of the exit of the person ensures that the unit 4 is brought back to the accumulation mode (step a.).

It should be noted moreover that the safety mode can be activated not only from the inactive mode (preferably), but optionally also from the timed mode (this possibility is not shown in Figure 1 so as to not excessively complicate it).

The method 1 and the system 100 therefore make it possible to optimally manage the operation of the compressor or in any case of the unit 4, which are responsible for subtracting heat inside the compartment 3 of the item of furniture 2, in that adequate countermeasures are adopted in the event the guest exits from the room without his or her exit being correctly detected.

More specifically, the method 1 and the system 100 make it possible to interact optimally with the energy saver and in general they provide a remedy to the widespread practice of leaving the key card 7 in the slot 6 even when the room is empty. After the first time period in fact, the unit 4 is restarted in any case, albeit in the timed mode.

It is furthermore to be noted that when the accumulation mode is started or restored, a timer is started so that, if the room remains unsold/unoccupied for more than a third preset time period (24 hours for example), the unit 4 is brought to an energy saving operating mode (step f.), which makes it possible to reduce energy consumption while still keeping the compartment 3 and its contents sufficiently refrigerated.

From the energy saving mode, the method can pass to the inactive mode (step b.) upon the entry of a person, but, in an entirely peculiar manner, this preferably does not occur immediately after detection of the entry, but after an additional third preset period (thirty minutes for example) has elapsed, in order to prevent the unit 4 from being switched off not only upon the entry of a person (who can be expected to stay for longer in the room), but also merely when the entry of a chambermaid is detected (in so doing giving up the potential saving of energy).

The method 1 and the system 100 make it possible therefore to manage the switching on and off of the compressor or in any case of the unit 4 in an optimal manner, even if a chambermaid or other member of staff should enter the room for a short time.

Finally, it should be noted that the system 100 and the unit 101 can offer the guest or the hotelier the possibility of operating in a simplified mode, in which only the timed mode is active, or in which the latter mode is absent and therefore the method can return from the inactive mode to the accumulation mode or pass to the safety mode.

The scope of the present invention is defined by the appended claims.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A method for controlling refrigerated items of furniture (2), placed in a room and of the type comprising a compartment (3), configured to accommodate food (A) and beverages (B), and a refrigeration unit (4), adapted to subtract heat from said compartment (3), wherein the method entails at least the following steps of:
a. making the refrigeration unit (4) to operate in an accumulation operating mode, in which the refrigeration unit (4) automatically maintains the temperature of the compartment (3) substantially at a first preset value,
b. upon detection of the entry into the room of a person, automatically activating an inactive operating mode, in which the refrigeration unit (4) is switched off,
c. after the refrigeration unit (4) has been made to operate in the inactive mode for a first preset time period, automatically activating a timed operating mode, in which the refrigeration unit (4) is kept active in at least one preset time slot,
d. during the operation of the refrigeration unit (4) in the inactive mode or in the timed mode, upon detection of the exit from the room of the person, restoring the accumulation mode.

2. The method according to claim 1, **characterized in that**, in the room in which said item of furniture (2) is placed, an energy saving device (5) is installed, which comprises a slot (6) adapted for the insertion of a key card (7), and is configured to inhibit the operation of electrical utilities when the key card (7) is not inserted in the slot (6), the detection of the entry into the room of a guest consisting in the introduction of the key card (7) into the slot (6) and the detection of the exit of the person from the room consisting in the removal of the key card (7) from the slot (6).

3. The method according to claim 1 or 2, **characterized in that** the timed mode keeps the refrigeration unit (4) active in one or more different time slots, in which the refrigeration unit (4) automatically keeps the temperature of the compartment (3) substantially at respective second preset values, which may be different from each other and/or optionally the same as the first preset value.

4. The method according to one or more of the preceding claims, **characterized in that** it entails, in a step e., activatable automatically at least during the execution of said step b. in which the refrigeration unit (4) is kept switched off in the inactive mode, when the current temperature value in the compartment (3) reaches a third preset value, higher than the first value, automatically activating a safety operating mode, in which the refrigeration unit (4) is made to operate at least to substantially maintain such third value inside the compartment (3).

5. The method according to one or more of the preceding claims, **characterized in that** it entails, after the refrigeration unit (4) has been made to operate in the accumulation mode for a second preset time period, automatically activating, in a step f., an energy saving operating mode, in which the refrigeration unit (4) automatically maintains the temperature of the compartment (3) substantially at a fourth preset value, higher than the first value, the second period being preferably of a duration comprised between 18 hours and 48 hours and being even more preferably equal to 24 hours.

6. The method according to claim 5, **characterized in that** it entails, in a step g., activatable automatically during the execution of said step f. after the detection of the entry into the room of a person and after a third preset time period has subsequently elapsed without the exit from the room of the person being detected, restoring the inactive mode, the third period being preferably of a duration comprised between 15 minutes and 1 hour and being even more preferably equal to 30 minutes.

7. The method according to one or more of the preceding claims, **characterized in that** the first preset value of temperature is chosen in the range 2-5° C and preferably is equal to 3° C.

8. The method according to one or more of the preceding claims, **characterized in that** the third preset value of temperature is chosen in the range 11-15° C, and preferably is equal to 13° C.

9. The method according to one or more of the preceding claims, **characterized in that** the fourth preset value of temperature is chosen in the range 5-9° C, and preferably is equal to 7° C.

10. The method according to one or more of the preceding claims, **characterized in that** the first period is preferably of a duration comprised between 6 hours and 12 hours and is even more preferably equal to 8 hours.

11. The method according to one or more of the preceding claims, **characterized in that** one or more of the preset values of temperature and/or one or more of the predefined periods are reprogrammable at will.

12. A control system, comprising at least:
- a refrigerated item of furniture (2), which can be placed in a room and which comprises a compartment (3), configured to accommodate food (A) and beverages (B), and a refrigeration unit (4), adapted to subtract heat from said compartment (3),
- an electronic unit (101) for control and management, configured to switch said refrigeration unit (4) on and off,
- means for detecting the entry and exit of a person to/from said room, which are functionally associated with said electronic unit (101), wherein said electronic unit (101) comprises at least:
- first instructions for making said refrigeration unit (4) operate in an accumulation operating mode, in which said unit (4) automatically maintains the temperature of the compartment (3) substantially at a first preset value,
- second instructions for automatically activating an inactive operating mode of said unit (4), in which said unit (4) is switched off, upon the detection of the entry into the room of a person,
- third instructions for automatically activating a timed operating mode of said unit (4), in which said refrigeration unit (4) is kept active in at least one preset time slot, after which said unit (4) is made to operate in the inactive mode for a first preset time period,
- fourth instructions for restoring the accumulation mode upon detection, during the operation of said unit (4) in the inactive mode or in the timed mode, of the exit from the room of the person.

13. The system according to claim 12, **characterized in that** said unit (101) comprises fifth instructions for automatically activating a safety operating mode of said unit (4), when, at least during the operation of said unit (4) in the inactive mode, the current value of temperature in said compartment (3) reaches a third preset value, higher than the first value, in the safety mode said refrigeration unit (4) maintaining the third value inside said compartment (3).

14. The system according to claim 12 or 13, **characterized in that** said unit (101) comprises sixth instructions for automatically activating an energy saving operating mode of said unit (4), in which said unit (4) automatically maintains the temperature of the compartment (3) substantially at a fourth preset value, higher than the first value, after said unit (4) is made to operate in the accumulation mode for a second preset time period.

15. The system according to claim 14, **characterized in that** said unit (101) comprises seventh instructions for restoring the inactive mode automatically when, during the operation in the energy saving mode, the entry into the room of a person is detected and, preferably, after a third preset time period has subsequently elapsed without the exit from the room of the person being detected.

## Patentansprüche

1. Ein Verfahren zum Steuern gekühlter Möbelstücke (2), platziert in einen Raum und von der Art, die ein Fach (3) umfasst, ausgebildet, um Lebensmittel (A) und Getränke (B) aufzunehmen, und eine Kühleinheit (4), ausgebildet, um dem Fach (3) Wärme zu entziehen, wobei das Verfahren mindestens folgende Schritte beinhaltet:
a. das Betreiben der Kühleinheit (4) in einem Staubetriebsmodus, in dem die Kühleinheit (4) die Temperatur des Fachs (3) automatisch im Wesentlichen bei einem ersten voreingestellten Wert hält,
b. bei Erfassung des Betretens des Raums durch eine Person, das automatische Aktivieren eines inaktiven Betriebsmodus, in dem die Kühleinheit (4) ausgeschaltet ist,
c. nachdem die Kühleinheit (4) über einen ersten voreingestellten Zeitraum im inaktiven Modus arbeiten gelassen wurde, das automatische Aktivieren eines getimten Betriebsmodus, in dem die Kühleinheit (4) in mindestens einem vordefinierten Zeitfenster aktiv gehalten wird,
d. während des Betriebs der Kühleinheit (4) im inaktiven Modus oder im getimten Modus, das Wiederherstellen des Staubetriebsmodus bei Erfassung des Verlassens des Raums durch die Person.

2. Das Verfahren gemäß Anspruch 1, **dadurch gekennzeichnet, dass** in dem Raum, in dem das Möbelstück (2) platziert ist, eine Energiesparvorrichtung (5) installiert ist, die einen Schlitz (6) umfasst, ausgebildet zum Einführen einer Schlüsselkarte (7), und konfiguriert ist, um den Betrieb von Energieversorgern zu hemmen, wenn die Schlüsselkarte (7) nicht in den Schlitz (6) eingeführt ist; wobei die Erfassung des Betretens des Raums durch einen Gast im Einführen der Schlüsselkarte (7) in den Schlitz (6) besteht und die Erfassung des Verlassens des Raums durch die Person in der Entnahme der Schlüsselkarte (7) aus dem Schlitz (6) besteht.

3. Das Verfahren gemäß Anspruch 1 oder 2, **dadurch gekennzeichnet, dass** der getimte Modus die Kühleinheit (4) in einem oder mehreren verschiedenen Zeitfenstern aktiv hält, in denen die Kühleinheit (4) die Temperatur des Fachs (3) im Wesentlichen bei entsprechenden zweiten voreingestellten Werten hält, die sich voneinander unterscheiden können und/oder wahlweise mit dem ersten voreingestellten Wert identisch sein können.

4. Das Verfahren gemäß einem oder mehreren der obigen Ansprüche, **dadurch gekennzeichnet, dass** es in einem Schritt e., automatisch aktivierbar mindestens während des Ausführens des Schritts b., in dem die Kühleinheit (4) im inaktiven Modus ausgeschaltet gehalten wird, wenn der aktuelle Temperaturwert im Fach (3) einen dritten voreingestellten Wert erreicht, der höher ist als der erste Wert, das automatische Aktiveren eines Sicherheitsbetriebsmodus beinhaltet, in welchem die Kühleinheit (4) arbeiten gelassen wird, um wenigstens diesen dritten Wert im Wesentlichen im Fach (3) aufrechtzuerhalten.

5. Das Verfahren gemäß einem oder mehreren der obigen Ansprüche, **dadurch gekennzeichnet, dass** es, nachdem die Kühleinheit (4) über einen zweiten voreingestellten Zeitraum zum Arbeiten im Staubetriebsmodus gebracht wurde, das automatische Aktivieren eines Energiespar-Betriebsmodus in einem Schritt f. beinhaltet, in welchem die Kühleinheit (4) die Temperatur des Fachs (3) automatisch im Wesentlichen auf einem vierten voreingestellten Wert hält, der höher ist als der erste Wert; wobei der zweite Zeitraum vorzugsweise von einer Dauer zwischen 18 Stunden und 48 Stunden und noch stärker bevorzugt gleich 24 Stunden ist.

6. Das Verfahren gemäß Anspruch 5, **dadurch gekennzeichnet, dass** es in einem Schritt g., automatisch aktivierbar während der Ausführung des Schritts f. nach der Erfassung des Betretens eines Raums durch eine Person, und nachdem anschließend ein dritter voreingestellter Zeitraum verstrichen ist, ohne dass das Verlassen des Raums durch die Person erfasst würde, das Wiederherstellen des inaktiven Modus beinhaltet; wobei der dritte Zeitraum vorzugsweise von einer Dauer zwischen 15 Minuten und 1 Stunde und noch stärker bevorzugt gleich 30 Minuten ist.

7. Das Verfahren gemäß einem oder mehreren der obigen Ansprüche, **dadurch gekennzeichnet, dass** der erste voreingestellte Temperaturwert im Bereich von 2-5°C gewählt und vorzugsweise gleich 3°C ist.

8. Das Verfahren gemäß einem oder mehreren der obigen Ansprüche, **dadurch gekennzeichnet, dass** der dritte voreingestellte Temperaturwert im Bereich von 11-15°C liegt und vorzugsweise gleich 13°C ist.

9. Das Verfahren gemäß einem oder mehreren der obigen Ansprüche, **dadurch gekennzeichnet, dass** der vierte voreingestellte Temperaturwert im Bereich von 5-9°C liegt und vorzugsweise gleich 7°C ist.

10. Das Verfahren gemäß einem oder mehreren der obigen Ansprüche, **dadurch gekennzeichnet, dass** der erste Zeitraum vorzugsweise von einer Dauer zwischen 6 Stunden und 12 Stunden und noch stärker bevorzugt gleich 8 Stunden ist.

11. Das Verfahren gemäß einem oder mehreren der obigen Ansprüche, **dadurch gekennzeichnet, dass** einer oder mehrere der voreingestellten Temperaturwerte und/oder einer oder mehrere der voreingestellten Zeiträume nach Wunsch neu programmierbar sind.

12. Ein Steuerungssystem, das mindestens Folgendes umfasst:
- ein gekühltes Möbelstück (2), das in einen Raum platziert werden kann und ein Fach (3) umfasst, ausgebildet, um Lebensmittel (A) und Getränke (B) aufzunehmen, und eine Kühleinheit (4), ausgebildet, um dem Fach (3) Wärme zu entziehen,
- eine Elektronikeinheit (101) zur Steuerung und Verwaltung, ausgebildet, um die Kühleinheit (4) ein- und auszuschalten,
- Mittel zum Erfassen des Betretens und Verlassens des Raums durch eine Person, die funktionell mit der Elektronikeinheit (101) verknüpft sind,
wobei die Elektronikeinheit (101) mindestens Folgendes umfasst:
- erste Anweisungen, um die Kühleinheit (4) in einem Staubetriebsmodus arbeiten zu lassen, in dem die Einheit (4) die Temperatur des Fachs (3) automatisch im Wesentlichen auf einem ersten voreingestellten Wert hält,
- zweite Anweisungen zum automatischen Aktiveren eines inaktiven Betriebsmodus der Einheit (4), in dem die Einheit (4) ausgeschaltet ist, bei Erfassung des Betretens des Raums durch eine Person,
- dritte Anweisungen zum automatischen Aktiveren eines getimten Betriebsmodus der Einheit (4), in welchem die Kühleinheit (4) über mindestens ein voreingestelltes Zeitfenster aktiv gehalten wird, wonach die Einheit (4) über einen ersten voreingestellten Zeitraum im inaktiven Modus arbeiten gelassen wird,
- vierte Anweisungen zum Wiederherstellen des Staubetriebsmodus bei Erfassung, während des Betriebs der Einheit (4) im inaktiven Modus oder im getimten Modus, des Verlassens des Raums durch die Person.

13. Das System gemäß Anspruch 12, **dadurch gekennzeichnet, dass** die Einheit (101) fünfte Anweisungen zum automatischen Aktivieren eines Sicherheitsbetriebsmodus der Einheit (4) umfasst, wenn, zumindest während des Betriebs der Einheit (4) im inaktiven Modus, der aktuelle Wert der Temperatur in dem Fach (3) einen dritten voreingestellten Wert erreicht, der höher ist als der erste Wert, wobei die Kühleinheit (4) in dem Sicherheitsbetriebsmodus den dritten Wert innerhalb des Fachs (3) aufrechterhält.

14. Das System gemäß Anspruch 12 oder 13, **dadurch gekennzeichnet, dass** die Einheit (101) sechste Anweisungen zum automatischen Aktivieren eines Energiespar-Betriebsmodus der Einheit (4) umfasst, in welchem die Einheit (4) die Temperatur des Fachs (3) automatisch im Wesentlichen auf einem vierten voreingestellten Wert hält, der höher ist als der erste Wert, nachdem die Einheit (4) über einen zweiten voreingestellten Zeitraum im Staubetriebsmodus arbeiten gelassen wurde.

15. Das System gemäß Anspruch 14, **dadurch gekennzeichnet, dass** die Einheit (101) siebte Anweisungen zum automatischen Wiederherstellen des inaktiven Modus umfasst, wenn während des Betriebs im Energiesparmodus das Betreten des Raums durch eine Person erfasst wird, und vorzugsweise, nachdem anschließend ein dritter voreingestellter Zeitraum ohne das Verlassen des Raums durch die erfasste Person verstrichen ist.

## Revendications

1. Procédé de contrôle de meubles réfrigérés (2) placés dans une pièce et du type comprenant un compartiment (3) configuré pour recevoir des aliments (A) et des boissons (B), et une unité de réfrigération (4) adaptée pour extraire la chaleur dudit compartiment (3), dans lequel le procédé comprend au moins les étapes suivantes :
a. faire fonctionner l'unité de réfrigération (4) dans un mode de fonctionnement en accumulation, dans lequel l'unité de réfrigération (4) maintient automatiquement la température du compartiment (3) sensiblement à une première valeur prédéfinie,
b. lors de la détection de l'entrée d'une personne dans la pièce, activer automatiquement un mode de fonctionnement inactif, dans lequel l'unité de réfrigération (4) est mise hors tension,
c. après que l'unité de réfrigération (4) a été mise en mode inactif pendant une première période de temps prédéfinie, activer automatiquement un mode de fonctionnement temporisé, dans lequel l'unité de réfrigération (4) est maintenue active pendant au moins un créneau horaire prédéfini,
d. pendant le fonctionnement de l'unité de réfrigération (4) en mode inactif ou en mode temporisé, lors de la détection de la sortie de la pièce de la personne, rétablir le mode d'accumulation.

2. Procédé selon la revendication 1, **caractérisé en ce que**, dans la pièce dans laquelle est placé ledit meuble (2), un dispositif d'économie d'énergie (5) est installé, qui comprend une fente (6) adaptée à l'insertion d'une carte-clé (7) et est configuré pour empêcher le fonctionnement des appareils électriques lorsque la carte-clé (7) n'est pas insérée dans la fente (6), la détection de l'entrée dans la pièce d'un invité consistant en l'introduction de la carte-clé (7) dans la fente (6) et la détection de la sortie de la personne de la pièce consistant en le retrait de la carte-clé (7) de la fente (6).

3. Procédé selon la revendication 1 ou 2, **caractérisé en ce que** le mode temporisé maintient l'unité de réfrigération (4) active pendant un ou plusieurs créneaux horaires différents, pendant lesquels l'unité de réfrigération (4) maintient automatiquement la température du compartiment (3) sensiblement à des secondes valeurs prédéfinies respectives, qui peuvent être différentes les unes des autres et/ou éventuellement identiques à la première valeur prédéfinie.

4. Procédé selon l'une ou plusieurs des revendications précédentes, **caractérisé en ce qu'**il comprend, dans une étape e., activable automatiquement au moins pendant l'exécution de ladite étape b. dans laquelle l'unité de réfrigération (4) est maintenue éteinte en mode inactif, lorsque la valeur de température actuelle dans le compartiment (3) atteint une troisième valeur prédéfinie, supérieure à la première valeur, l'activation automatique d'un mode de fonctionnement de sécurité, dans lequel l'unité de réfrigération (4) est mise en fonctionnement au moins pour maintenir sensiblement cette troisième valeur à l'intérieur du compartiment (3).

5. Procédé selon une ou plusieurs des revendications précédentes, **caractérisé en ce qu'**il comprend, après que l'unité de réfrigération (4) a été mise en fonctionnement en mode d'accumulation pendant une deuxième période de temps prédéfinie, l'activation automatique, dans une étape f., d'un mode de fonctionnement à économie d'énergie, dans lequel l'unité de réfrigération (4) maintient automatiquement la température du compartiment (3) sensiblement à une quatrième valeur prédéfinie, supérieure à la première valeur, la deuxième période étant de préférence d'une durée comprise entre 18 heures et 48 heures et étant de préférence égale à 24 heures.

6. Procédé selon la revendication 5, **caractérisé en ce qu'**il consiste, dans une étape g., activable automatiquement pendant l'exécution de ladite étape f. après la détection de l'entrée dans la pièce d'une personne et après qu'un troisième intervalle de temps prédéfini s'est écoulé sans que la sortie de la pièce de la personne ait été détectée, en rétablissant le mode inactif, la troisième période étant de préférence d'une durée comprise entre 15 minutes et 1 heure et étant encore plus préférablement égale à 30 minutes.

7. Procédé selon l'une ou plusieurs des revendications précédentes, **caractérisé en ce que** la première valeur prédéfinie de température est choisie dans la plage de 2 à 5 °C et est de préférence égale à 3 °C.

8. Procédé selon l'une ou plusieurs des revendications précédentes, **caractérisé en ce que** la troisième valeur prédéfinie de température est choisie dans la plage de 11 à 15 °C et est de préférence égale à 13 °C.

9. Procédé selon l'une ou plusieurs des revendications précédentes, **caractérisé en ce que** la quatrième valeur prédéfinie de température est choisie dans la plage de 5 à 9 °C, et est de préférence égale à 7 °C.

10. Procédé selon l'une ou plusieurs des revendications précédentes, **caractérisé en ce que** la première période a de préférence une durée comprise entre 6 heures et 12 heures et est de préférence égale à 8 heures.

11. Procédé selon l'une ou plusieurs des revendications précédentes, **caractérisé en ce qu'**une ou plusieurs des valeurs prédéfinies de température et/ou une ou plusieurs des périodes prédéfinies sont reprogrammables à volonté.

12. Système de contrôle, comprenant au moins :
- un meuble réfrigéré (2), qui peut être placé dans une pièce et qui comprend un compartiment (3), configuré pour recevoir des aliments (A) et des boissons (B), et une unité de réfrigération (4), adaptée pour extraire de la chaleur dudit compartiment (3),
- une unité électronique (101) de commande et de gestion, configurée pour allumer et éteindre l'unité de réfrigération (4),
- des moyens pour détecter l'entrée et la sortie d'une personne dans/de ladite pièce, qui sont associés fonctionnellement à ladite unité électronique (101), où ladite unité électronique (101) comprend au moins :
- des premières instructions pour faire fonctionner ladite unité de réfrigération (4) dans un mode de fonctionnement d'accumulation, dans lequel ladite unité (4) maintient automatiquement la température du compartiment (3) sensiblement à une première valeur prédéfinie,
- des deuxièmes instructions pour activer automatiquement un mode de fonctionnement inactif de ladite unité (4), dans lequel ladite unité (4) est mise hors tension, lors de la détection de l'entrée d'une personne dans la pièce,
- des troisièmes instructions pour activer automatiquement un mode de fonctionnement temporisé de ladite unité (4), dans lequel ladite unité de réfrigération (4) est maintenue active pendant au moins un intervalle de temps prédéfini, après quoi ladite unité (4) est mise en mode inactif pendant une première période de temps prédéfinie,
- des quatrièmes instructions pour rétablir le mode d'accumulation lors de la détection, pendant le fonctionnement de ladite unité (4) en mode inactif ou en mode temporisé, de la sortie de la pièce de la personne.

13. Système selon la revendication 12, **caractérisé en ce que** ladite unité (101) comprend des cinquièmes instructions pour activer automatiquement un mode de fonctionnement de sécurité de ladite unité (4) lorsque, au moins pendant le fonctionnement de ladite unité (4) en mode inactif, la valeur actuelle de la température dans ledit compartiment (3) atteint une troisième valeur prédéfinie, supérieure à la première valeur, dans le mode de sécurité, ladite unité de réfrigération (4) maintenant la troisième valeur à l'intérieur dudit compartiment (3).

14. Système selon la revendication 12 ou 13, **caractérisé en ce que** ladite unité (101) comprend des sixièmes instructions pour activer automatiquement un mode de fonctionnement à économie d'énergie de ladite unité (4), dans lequel ladite unité (4) maintient automatiquement la température du compartiment (3) sensiblement à une quatrième valeur prédéfinie, supérieure à la première valeur, après que ladite unité (4) a été mise en fonctionnement dans le mode d'accumulation pendant une deuxième période de temps prédéfinie.

15. Système selon la revendication 14, **caractérisé en ce que** ladite unité (101) comprend des septièmes instructions pour rétablir automatiquement le mode inactif lorsque, pendant le fonctionnement en mode d'économie d'énergie, l'entrée d'une personne dans la pièce est détectée et, de préférence, après qu'une troisième période de temps prédéfinie s'est écoulée sans que la sortie de la pièce de la personne ait été détectée.
